# EUROPEAN PATENT APPLICATION

(11) **EP 4 530 672 A1**
(43) Date of publication of application: **02.04.2025**
(21) Application number: 22946666.9
(22) Date of filing: 28.12.2022
(51) Int. Cl.: G01S 13/86

(54) **RADAR-VISION COLLABORATIVE TARGET TRACKING METHOD AND SYSTEM**

(30) Priority: 16.06.2022 CN 202210676713
(71) Applicant: Zhejiang Uniview Technologies Co., Ltd., Hangzhou, Zhejiang 310051 (CN)
(72) Inventor: ZHOU, Di, Hangzhou, Zhejiang 310051 (CN); DENG, Songjie, Hangzhou, Zhejiang 310051 (CN); XU, Aihua, Hangzhou, Zhejiang 310051 (CN); ZHANG, Pengguo, Hangzhou, Zhejiang 310051 (CN)
(74) Representative: HGF
(86) International application number: PCT/CN2022/142610
(87) International publication number: WO 2023/241002

(57) **Abstract**

Provided is a radar-vision collaborative target tracking method and target tracking system. The radar-vision collaborative target tracking method includes acquiring a first image of a first vehicle at an entry node to determine vehicle information and sending the vehicle information and the time point at which the first vehicle passes the identification point corresponding to the entry node to an intermediate node adjacent to the entry node; determining the driving information of the first vehicle based on the radar tracking information at the intermediate node and sending the time point at which the first vehicle reaches the identification point and the vehicle information to the next node; determining the driving information based on the radar tracking information at the exit node, and acquiring a second image of the first vehicle to determine the vehicle information; determining that the tracking is correct when the vehicle information determined according to the second image is consistent with the received vehicle information. By using radar to track the vehicle at intermediate nodes, it is possible to avoid installing cameras inside the tunnel and achieve high-precision tracking of vehicles in the tunnel in a tunnel scenario.

## Description

The present application claims priority to Chinese Patent Application No. 202210676713.4 filed with the China National Intellectual Property Administration (CNIPA) on Jun. 16, 2022, the disclosure of which is incorporated herein by reference in its entirety.

### TECHNICAL FIELD

The present application relates to traffic monitoring technology, for example, a radar-vision collaborative target tracking method and system.

### BACKGROUND

Traffic violations, such as lane changes, are generally monitored and evidenced using cameras. In tunnels, due to the high presence of dust, cameras are prone to being obscured, which leads to fewer installations, making it difficult to monitor and collect evidence of violations like illegal lane changes of vehicles inside tunnels. Additionally, even if cameras are installed in tunnels, dust in the air can easily pollute the cameras, resulting in a significant decrease in detection accuracy. Regular cleaning of cameras requires labor or the installation of additional automated cleaning equipment, which increases the cost of tunnel monitoring.

### SUMMARY

The embodiments of the present application provide a radar-vision collaborative target tracking method and system that can improve the detection accuracy of vehicles inside tunnels.

An embodiment of the present application provides a radar-vision collaborative target tracking method. The method includes the steps below.

A first image of a first vehicle is acquired at an entry node. The vehicle information of the first vehicle is determined according to the first image. When the first vehicle reaches an identification point corresponding to the entry node, the vehicle information of the first vehicle and the time point at which the first vehicle passes the identification point corresponding to the entry node are sent to an intermediate node adjacent to the entry node.

At an intermediate node, the first vehicle is determined according to the time point at which the first vehicle passes an identification point corresponding to a previous node and the position of the identification point corresponding to the previous node. The first radar tracking information is acquired by tracking the first vehicle starting from the identification point corresponding to the previous node. The driving information of the first vehicle is determined according to the first radar tracking information. When the first vehicle reaches an identification point corresponding to the current intermediate node, the time point at which the first vehicle reaches the identification point corresponding to the current intermediate node and the vehicle information of the first vehicle are sent to a next node.

At an exit node, the first vehicle is determined according to the time point at which the first vehicle passes an identification point corresponding to a previous node and the position of the identification point corresponding to the previous node. The second radar tracking information is acquired by tracking the first vehicle from the identification point corresponding to the previous node. The driving information of the first vehicle is determined according to the second radar tracking information. A second image of the first vehicle is acquired. The vehicle information is determined according to the second image. When the vehicle information determined according to the second image matches the vehicle information of the first vehicle received from the previous node, it is determined that the tracking of the first vehicle is correct. At least one intermediate node is included between the entry node and the exit node.

An embodiment of the present application provides a radar-vision collaborative target tracking system. The system includes an entry node, an exit node, and at least one intermediate node located between the entry node and the exit node. The entry node located at the entrance of a tunnel includes a camera module. The at least one intermediate node located in the tunnel includes a radar module. The exit node located at the exit of the tunnel includes the radar module and the camera module. Each node corresponds to an identification point.

The entry node is configured to acquire a first image of a first vehicle, determine the vehicle information of the first vehicle according to the first image, and when the first vehicle reaches an identification point corresponding to the entry node, send the vehicle information of the first vehicle and the time point at which the first vehicle passes the identification point corresponding to the entry node to an intermediate node adjacent to the entry node.

The intermediate node is configured to determine the first vehicle according to the time point at which the first vehicle passes an identification point corresponding to a previous node and the position of the identification point corresponding to the previous node, acquire the first radar tracking information obtained by tracking the first vehicle starting from the identification point corresponding to the previous node, and determine the driving information of the first vehicle according to the first radar tracking information; and when the first vehicle reaches an identification point corresponding to the current intermediate node, send the time point at which the first vehicle reaches the identification point corresponding to the current intermediate node and the vehicle information of the first vehicle to a next node.

The exit node is configured to determine the first vehicle according to the time point at which the first vehicle passes an identification point corresponding to a previous node and the position of the identification point corresponding to the previous node, acquire the second radar tracking information obtained by tracking the first vehicle from the identification point corresponding to the previous node, determine the driving information of the first vehicle according to the second radar tracking information, acquire a second image of the first vehicle, determine the vehicle information according to the second image, and when the vehicle information determined according to the second image matches the vehicle information of the first vehicle received from the previous node, determine that the tracking of the first vehicle is correct.

### BRIEF DESCRIPTION OF DRAWINGS

FIG. 1 is a block diagram of a radar-vision collaborative target tracking system according to an example embodiment.
FIG. 2 is a flowchart of a radar-vision collaborative target tracking method according to an example embodiment.

### DETAILED DESCRIPTION

The present application includes and contemplates the combination of features and elements known to those of ordinary skill in the art. The disclosed embodiments, features, and elements of the present application may also be combined with any conventional features or elements to form unique technical solutions as defined by the claims. Any feature or element of any embodiment may also be combined with features or elements from other technical solutions to form another unique technical solution as defined by the claims. Therefore, it should be understood that any feature illustrated and/or discussed in the present application may be implemented individually or in any appropriate combination. Thus, apart from the limitations imposed by the appended claims and their equivalent substitutions, the embodiments are not subject to other limitations. Additionally, various modifications and changes may be made within the scope of the appended claims.

Furthermore, when describing representative embodiments, the specification may have presented methods and/or processes as specific sequences of steps. However, to the extent that the method or process does not depend on the specific sequence of steps described herein, the method or process should not be limited to the specific sequence of steps. As would be understood by those of ordinary skill in the art, other step sequences are also possible. Thus, the specific sequence of steps set forth in the specification should not be construed as a limitation of the claims. Moreover, the claims related to the method and/or process should not be limited to performing their steps in the written order, as those skilled in the art may easily understand that the sequence may vary while still remaining within the spirit and scope of the embodiments of the present application.

The embodiments of the present disclosure provide a radar-vision collaborative target tracking method and system. The method and the system utilize the collaboration between cameras at the tunnel entrance and exit and radar within the tunnel to track vehicles and provide driving information for determining traffic behaviors.

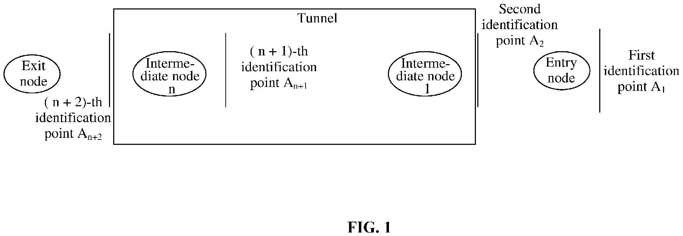

FIG. 1 is a block diagram of a radar-vision collaborative target tracking system according to an example embodiment. As shown in FIG. 1, the radar-vision collaborative target tracking system provided in this embodiment includes an entry node, an exit node, and at least one intermediate node located between the entry node and the exit node (n intermediate nodes are included in this embodiment, that is, intermediate node 1 to intermediate node n, and n is greater than or equal to 1). The entry node may be set at the entrance of a tunnel (with a possible distance from the tunnel). The exit node may be set at the exit of the tunnel (also with a possible distance from the tunnel). The intermediate node is set in the tunnel. When multiple intermediate nodes exist, these intermediate nodes may be arranged either uniformly (equally spaced from each other) or non-uniformly. This embodiment does not limit such arrangements. The distance between the intermediate nodes is less than the radar detection range, and the distance may be 240 meters (only for example, the distance may be other values). The relationship of order exists between the nodes. The next node of the entry node is intermediate node 1, the previous node of intermediate node 1 is the entry node, the next node is intermediate node 2, and so on, the previous node of intermediate node n is intermediate node (n - 1), and the next node is the exit node. All nodes maintain synchronized clocks.

The entry node may include a camera module (such as a camera). The intermediate node may include a radar module. The exit node may include both a radar module and a camera module. The radar module and camera module at the exit node may be integrated into a single radar-camera device or may be two independent devices, that is, independent radar and an independent camera.

In another example embodiment, the entry node may include both a radar module and a camera module, and the roles of the entry node and exit node may be swapped. That is, when a vehicle enters the tunnel from the exit node, the exit node only uses a camera module, and the entry node uses a radar module and a camera module. However, this embodiment is not limited to this configuration, and corresponding radar modules and camera modules may be provided separately for vehicles traveling in different directions. That is, when the tunnel includes a first port and a second port, and the first port serves as the entrance and the second port serves as the exit, a corresponding target tracking system exists; when the second port serves as the entrance and the first port serves as the exit, another corresponding target tracking system exits. Alternatively, the same target tracking system may be used, where the node at the first port and the node at the second port are both provided with a camera module and a radar module. When the node at the first port serves as the entry node, only the camera module is used, and when the node at the first port serves as the exit node, both the radar module and the camera module are used. The second port functions similarly and will not be further explained.

In an example embodiment, each of the entry node and intermediate nodes corresponds to an identification point. For example, the entry node corresponds to a first identification point A₁, and intermediate node i corresponds to an (i + 1)-th identification point Aᵢ₊₁, where i ranges from 1 to n, and n is greater than or equal to 1. The identification point may be positioned on the side of the node corresponding to the identification point away from the next node. For example, a first identification point A₁, corresponding to the entry node, is positioned on the side of the entry node away from intermediate node 1. For example, the first identification point A₁ may be placed 24 meters ahead of the entry node (that is, on the side away from intermediate node 1). A second identification point A₂ may be placed 24 meters ahead of intermediate node 1, and similarly, an (n + 1)-th identification point Aₙ₊₁ may be placed 24 meters ahead of intermediate node n. The identification point is located within the monitoring range of the next node corresponding to the identification point. That is, the first identification point A₁, corresponding to the entry node, is within the monitoring range of intermediate node 1; the second identification point A₂, corresponding to intermediate node 1, is within the monitoring range of intermediate node 2; and the (n + 1)-th identification point Aₙ₊₁, corresponding to intermediate node n, is within the monitoring range of the exit node. The position order of the identification points is consistent with the position order of the corresponding nodes.

In an example embodiment, the exit node may correspond to an (n + 2)-th identification point Aₙ₊₂. However, this embodiment is not limited to this configuration, and the exit node may not correspond to an identification point.

In an example embodiment, the (n + 2)-th identification point Aₙ₊₂ may be placed 24 meters ahead of the exit node (that is, on the side of the exit node adjacent to intermediate node n).

The positioning of the identification points 24 meters ahead of the corresponding nodes in the preceding embodiments is just an example, and other values may also be possible.

In an example embodiment, the entry node is configured to acquire a first image of a first vehicle, determine the vehicle information of the first vehicle according to the first image, and when the first vehicle reaches an identification point corresponding to the entry node, send the vehicle information of the first vehicle and the time point at which the first vehicle passes the identification point corresponding to the entry node to an intermediate node adjacent to the entry node.

The intermediate node is configured to determine the first vehicle according to the time point at which the first vehicle passes an identification point corresponding to a previous node and the position of the identification point corresponding to the previous node, acquire the first radar tracking information obtained by tracking the first vehicle starting from the identification point corresponding to the previous node, and determine the driving information of the first vehicle according to the first radar tracking information; and when the first vehicle reaches an identification point corresponding to the current intermediate node, send the time point at which the first vehicle reaches the identification point corresponding to the current intermediate node and the vehicle information of the first vehicle to a next node.

The exit node is configured to determine the first vehicle according to the time point at which the first vehicle passes an identification point corresponding to a previous node and the position of the identification point corresponding to the previous node, acquire the second radar tracking information obtained by tracking the first vehicle from the identification point corresponding to the previous node, determine the driving information of the first vehicle according to the second radar tracking information, acquire a second image of the first vehicle, determine the vehicle information according to the second image, and when the vehicle information determined according to the second image matches the vehicle information of the first vehicle received from the previous node, determine that the tracking of the first vehicle is correct.

In an example embodiment, the vehicle information may include at least one of the following: the license plate number or the vehicle feature vector. The vehicle feature vector may be obtained by inputting an image of the vehicle into a neural network model. The consistency of vehicle information includes the following: when the vehicle information includes the license plate number, the license plate numbers are the same; when the vehicle information includes the vehicle feature vector, the vehicle feature vectors are consistent; when the vehicle information includes both the license plate number and the vehicle feature vector, the license plate numbers are the same, and the vehicle feature vectors are consistent. The consistency of two feature vectors means that when the Euclidean distance or cosine distance of the two feature vectors is less than or equal to a preset threshold, the two feature vectors are consistent. When the vehicle information includes both the license plate number and the vehicle feature vector, the accuracy of the identified vehicle can be improved compared to only identifying the license plate number.

In an example embodiment, the driving information may include at least one of the following: a trajectory, the speed, or a violation (traffic rule violation). The violation may include behaviors such as speeding or lane changing on a solid line. The trajectory is a spatio-temporal trajectory, and each trajectory point includes a time point and the position of the vehicle at the time point.

The solution provided in this embodiment involves deploying the camera module outside the tunnel, where rainwater occasionally washes away small amounts of dust, making the camera less prone to dust accumulation. The radar is less sensitive to dust, facilitating vehicle monitoring.

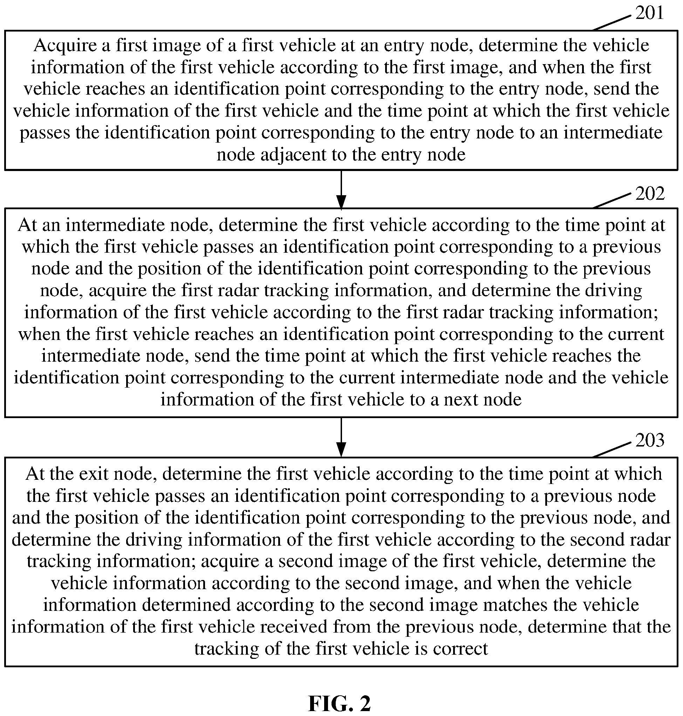

FIG. 2 is a flowchart of a radar-vision collaborative target tracking method according to an embodiment of the present disclosure. As shown in FIG. 2, the radar-vision collaborative target tracking method provided in this embodiment includes S201 and S203.

In S201, a first image of a first vehicle is acquired at an entry node; the vehicle information of the first vehicle is determined according to the first image; when the first vehicle reaches an identification point corresponding to the entry node, the vehicle information of the first vehicle and the time point at which the first vehicle passes the identification point corresponding to the entry node are sent to an intermediate node adjacent to the entry node.

In S202, at an intermediate node, the first vehicle is determined according to the time point at which the first vehicle passes an identification point corresponding to a previous node and the position of the identification point corresponding to the previous node; the first radar tracking information is acquired by tracking the first vehicle starting from the identification point corresponding to the previous node, and the driving information of the first vehicle is determined according to the first radar tracking information; when the first vehicle reaches an identification point corresponding to the current intermediate node, the time point at which the first vehicle reaches the identification point corresponding to the current intermediate node and the vehicle information of the first vehicle are sent to a next node.

The time point at which the first vehicle passes the identification point corresponding to the previous node is sent by the previous node to the current intermediate node, and the position of the identification point corresponding to the previous node may be pre-configured in the current node.

In S203, at the exit node, the first vehicle is determined according to the time point at which the first vehicle passes an identification point corresponding to a previous node and the position of the identification point corresponding to the previous node, the second radar tracking information is acquired by tracking the first vehicle from the identification point corresponding to the previous node, and the driving information of the first vehicle is acquired according to the second radar tracking information; a second image of the first vehicle is acquired, the vehicle information is determined according to the second image, and when the vehicle information determined according to the second image matches the vehicle information of the first vehicle received from the previous node, it is determined that the tracking of the first vehicle is correct. At least one intermediate node is included between the entry node and the exit node.

In the radar-vision collaborative target tracking method provided in this embodiment, radar is used at intermediate nodes to track vehicles. Thus, it is possible to avoid installing cameras inside the tunnel and achieve high-precision tracking of vehicles within the tunnel in a tunnel scenario.

In an example embodiment, the method also includes sending the lane information of the first vehicle to a next node when the first vehicle reaches an identification point corresponding to the current node, where the lane information here refers to the information of the lane the first vehicle is in when the first vehicle reaches the identification point corresponding to the current node.

At the intermediate node, determining the first vehicle according to the time point at which the first vehicle passes the identification point corresponding to the previous node and the position of the identification point corresponding to the previous node includes the following.

At the intermediate node, the first vehicle is determined according to the time point at which the first vehicle passes the identification point corresponding to the previous node, the lane information of the first vehicle, and the position of the identification point corresponding to the previous node.

In this embodiment, the current node also sends the lane information to the next node. The next node can locate the vehicle more accurately according to the lane information, thereby improving tracking accuracy. However, this embodiment of the present disclosure is not limited to thereto. The lane information may not be transmitted, and the vehicle positioning may be performed by radar itself. Additionally, if only one lane exists in the tunnel, lane information also does not to be transmitted. The lane information may include a lane number.

In an example embodiment, the method also includes caching radar tracking data at at least one of the intermediate node or the exit node.

At the intermediate node or the exit node, determining the first vehicle according to the time point at which the first vehicle passes the identification point corresponding to the previous node and the position of the identification point corresponding to the previous node includes the following.

The cached radar tracking data is searched at the intermediate node or the exit node, and the first vehicle is determined from the cached radar tracking data according to the time point at which the first vehicle passes the identification point corresponding to the previous node and the position of the identification point corresponding to the previous node. The solution provided by this embodiment enables accurate vehicle positioning when a time delay exists between nodes.

In an example embodiment, the method also includes the following.

At the intermediate node, the vehicle information and the driving information of the first vehicle are reported to a management platform.

At the exit node, the vehicle information and the driving information of the first vehicle are reported to the management platform, and when the tracking of the first vehicle is determined to be correct, the correct tracking information of the first vehicle is reported to the management platform.

The management platform determines the traffic behavior of the first vehicle according to the driving information of the correctly tracked first vehicle. The determination of the traffic behavior may include determining whether a violation exists and generating a penalty notice for the violation. The solution provided by this embodiment can determine the traffic behavior of the vehicle based on the tracked information.

In an example embodiment, the method also includes the following.

A vehicle identifier is assigned to the first vehicle at the entry node, and when the vehicle information of the first vehicle and the time point at which the first vehicle passes the identification point corresponding to the entry node are sent to the intermediate node adjacent to the entry node, the vehicle identifier assigned to the first vehicle is carried.

When the first vehicle is determined at the intermediate node or the exit node according to the time point at which the first vehicle passes the identification point corresponding to the previous node and the position of the identification point corresponding to the previous node, the vehicle identifier of the first vehicle is inherited, and the vehicle identifier of the first vehicle is reported to the management platform.

In an example embodiment, the vehicle identifier of the first vehicle may be carried when the vehicle information and driving information of the first vehicle are reported to the management platform.

In the solution provided by this embodiment, a vehicle identifier is also assigned to the vehicle, and the management platform can determine the driving information of the same vehicle according to the vehicle identifier. However, the embodiment of the present disclosure is not limited thereto. The vehicle identifier may not be assigned, and the driving information of the same vehicle may be determined according to the license plate number or feature vector of the vehicle.

In an example embodiment, the method may also include the following.

In response to detecting that at the intermediate node, a second vehicle is blocked by a large vehicle at a first time point and a first location, the second vehicle is associated with the large vehicle, and the vehicle information of the second vehicle, the first time point, the first location, and the identifier of the large vehicle are reported to the management platform. In response to detecting that a third vehicle appears after the large vehicle, a vehicle identifier is assigned to the third vehicle, a second time point and a second location when the third vehicle is discovered are recorded, and the second time point and the second location are reported to the management platform. The third vehicle is tracked, the tracked driving information of the third vehicle is recorded, and when the third vehicle reaches the identification point corresponding to the current intermediate node, the time point at which the third vehicle reaches the identification point corresponding to the current intermediate node, the vehicle information of the third vehicle, and the vehicle identifier of the third vehicle are sent to the next node. The large vehicle meets the preset size requirement.

The management platform receives the driving information and the vehicle information of the third vehicle reported by the exit node, where the driving information includes a spatio-temporal trajectory. In response to determining that the third vehicle is a previously lost vehicle, the second time point and the second location of the third vehicle are acquired, a target large vehicle is searched whose spatio-temporal position matches the second time point and second location in the spatio-temporal trajectory, a first associated vehicle that is blocked by the target large vehicle before the second time point is determined, and the time point, also referred to as the associated time point, at which the target large vehicle blocks the first associated vehicle is acquired.

The management platform obtains a target temporary trajectory by splicing a spatio-temporal trajectory of the first associated vehicle before the associated time point, a spatio-temporal trajectory of the target large vehicle from the associated time point to the second time point, and a spatio-temporal trajectory of the third vehicle after the second time point and determines whether the target temporary trajectory is correct according to whether the vehicle information of the first associated vehicle and the vehicle information of the third vehicle are the same, and when the target temporary trajectory is correct, the target temporary trajectory is used as a spatio-temporal trajectory of the third vehicle. The solution provided by this embodiment splices the spatio-temporal trajectory of the lost vehicle by searching for the large vehicle with a spatio-temporal intersection and thus can verify whether the spliced trajectory is correct.

In an example embodiment, the method also includes the following: other large vehicle, other than the target large vehicle, is determined that has a spatio-temporal intersection with the target large vehicle before the second time point and has an associated vehicle, where the spatio-temporal intersection time point of an i-th other large vehicle and the target large vehicle is an i-th intersection time point, an associated vehicle of the i-th other large vehicle is vehicle i, and the time point at which the i-th other large vehicle blocks the vehicle i is an i-th associated time point, where i is an integer from 1 to m, and m is greater than or equal to 1.

An i-th temporary trajectory is generated for the i-th other large vehicle.

In response to determining that the i-th associated time point is earlier than the i-th intersection time point, the i-th temporary trajectory is a spatio-temporal trajectory obtained by splicing a spatio-temporal trajectory of the vehicle i before the i-th associated time point, a spatio-temporal trajectory of the i-th other large vehicle from the i-th associated time point to the i-th intersection time point, a spatio-temporal trajectory of the target large vehicle from the i-th intersection time point to the second time point, and a spatio-temporal trajectory of the third vehicle after the second time point.

In response to determining that the i-th associated time point is later than the i-th intersection time point, the i-th temporary trajectory is a spatio-temporal trajectory obtained by splicing the spatio-temporal trajectory of the vehicle i before the i-th associated time point, the spatio-temporal trajectory of the target large vehicle from the i-th associated time point to the second time point, and the spatio-temporal trajectory of the third vehicle after the second time point. In the time period between the i-th associated time point and the second time point, the i-th other large vehicle and the target large vehicle are located in different lanes and travel side by side. In response to determining that the preceding conditions are met and the i-th associated time point is later than the i-th intersection time point, three spatio-temporal trajectories, that is, the spatio-temporal trajectory of the vehicle i before the i-th associated time point, the spatio-temporal trajectory of the target large vehicle from the i-th associated time point to the second time point, and the spatio-temporal trajectory of the third vehicle after the second time point, can be spliced.

Whether the i-th temporary trajectory is correct is determined according to whether the vehicle information of vehicle i and the vehicle information of the third vehicle are the same, and when the i-th temporary trajectory is correct, the i-th temporary trajectory is used as the spatio-temporal trajectory of the third vehicle.

The technical solution of the present disclosure is explained through the example below.

The target tracking method provided by this embodiment includes S301 to S303.

**In** S301, the entry node monitors a vehicle.

The entry node captures the vehicle, acquires the image of the vehicle, determines the license plate number of the vehicle according to the image of the vehicle, and obtains the feature vector of the vehicle through a neural network model according to the image of the vehicle. When it is detected that the vehicle reaches the first identification point A₁, the entry node sends information such as the lane position of the vehicle, the time at which the vehicle passes the first identification point A₁, the license plate number, the feature vector of the vehicle, and the identifier (ID) generated for the vehicle to intermediate node 1. The entry node may perform the preceding operations for every vehicle that reaches the first identification point A₁.

**In** S302, intermediate nodes collaborate with the entry node to monitor the vehicle.

Each intermediate node monitors the vehicle in real-time and can accurately acquire the position, speed, and driving direction of the vehicle. The monitoring range of each intermediate node covers the identification point corresponding to the previous node.

Node 1 receives the information sent by the entry node, and according to the vehicle ID, the position of the first identification point A₁, the lane position of the vehicle, and the time point at which the vehicle passes the first identification point A₁, Node 1 can lock the vehicle at the position and lane of the first identification point A₁ and then inherits the ID of the vehicle and tracks the vehicle.

When intermediate node 1 receives the vehicle information sent by the entry node, intermediate node 1 starts tracking the vehicle from the first identification point A₁ corresponding to the entry node, records the driving information of the vehicle (including the trajectory, speed, and violation), and reports the driving information along with the license plate number, feature vector of the vehicle, vehicle ID, and other information sent by the entry node to the management platform. The management platform stores the vehicle ID, driving information, license plate number, and vehicle feature vector.

When the vehicle reaches the second identification point A₂ corresponding to intermediate node 1, intermediate node 1 sends the ID of the vehicle, the lane position of the vehicle, the time point at which the vehicle passes the second identification point A₂, the license plate number of the vehicle, the feature vector of the vehicle, and other information to the next node (if another intermediate node exists, the next node is intermediate node 2, and if only one intermediate node exists, the next node is the exit node; in this embodiment, the next node is intermediate node 2). When intermediate node 2 receives the vehicle information sent by intermediate node 1, intermediate node 2 starts tracking the vehicle from the second identification point A₂ corresponding to intermediate node 1, records the driving information of the vehicle (which may include the trajectory, speed, and violation), and reports the driving information along with the license plate number of the vehicle, the feature vector of the vehicle, vehicle ID, and other information sent by intermediate node 1 to the management platform.

Subsequent intermediate nodes perform similar processing. When intermediate node n receives the vehicle information sent by intermediate node n - 1, intermediate node n starts tracking the vehicle from the n-th identification point Aₙ corresponding to intermediate node n - 1, records the driving information of the vehicle (which may include the trajectory, speed, and violations), and reports the driving information along with the license plate number of the vehicle, the feature vector of the vehicle, vehicle ID, and other information sent by intermediate node n - 1 to the management platform. When the vehicle reaches the (n + 1)-th identification point Aₙ₊₁ corresponding to intermediate node n, intermediate node n sends the ID of the vehicle, the lane position of the vehicle, the time point at which the vehicle passes the (n + 1)-th identification point Aₙ₊₁, the license plate number of the vehicle, the feature vector of the vehicle, and other information to the exit node.

In S303, the exit node monitors and verifies the vehicle.

The radar module of the exit node acquires the vehicle ID, license plate number, feature vector, and lane position of the vehicle, the time point at which the vehicle reaches (n + 1)-th identification point Aₙ₊₁ corresponding to intermediate node n, and other information from the information sent by the intermediate node n. The radar module of the exit node determines the vehicle according to the lane position, the position of the (n + 1)-th identification point Aₙ₊₁ corresponding to intermediate node n, and the time point at which the vehicle reaches the (n + 1)-th identification point Aₙ₊₁ corresponding to the intermediate node n. The radar module of the exit node starts tracking the vehicle from the (n + 1)-th identification point Aₙ₊₁ corresponding to the intermediate node n, records the driving information of the vehicle, and reports the driving information and the license plate number, vehicle feature vector, vehicle ID, and other information of the vehicle acquired from the intermediate node n to the management platform. When the vehicle reaches the (n + 2)-th identification point Aₙ₊₂ corresponding to the exit node, the camera module of the exit node may identify the vehicle (but not limited to thereto; the camera module of the exit node may identify the vehicle during the tracking period by the radar module of the exit node), acquire the license plate number and feature vector of the vehicle, and compare the license plate number and feature vector with the license plate number and feature vector acquired from intermediate node n. If the two license plate numbers and two feature vectors match completely (that is, the license plate numbers are the same and the feature vectors are consistent), it indicates that the tracking is correct, and the comparison result of successful tracking is reported to the management platform. If the license plate numbers are different or the feature vectors are inconsistent, it indicates a tracking error, and the result of incorrect tracking may be reported. Alternatively, if the comparison result of the tracking error is not reported, that is, when the management platform does not receive a report of successful tracking, it is considered that tracking of the vehicle is incorrect.

The management platform penalizes violating vehicles based on the result of correct tracking, that is, the management platform determines the traffic behavior of a vehicle according to the driving information of the correctly tracked vehicle and penalizes the vehicle when a violation is detected. No penalty is imposed on incorrectly tracked vehicles. The driving information of the correctly tracked vehicle comes from the driving information of the vehicle reported by intermediate node 1 to intermediate node n and the exit node. The solution provided by this embodiment imposes a penalty only when the tracking is correct, which can improve the accuracy of the penalty and reduce errors.

**In** another example embodiment, the exit node may send the image of the vehicle captured by the camera module of the exit node or the acquired license plate number and feature vector of the vehicle to the management platform. The management platform compares the license plate number and feature vector with the license plate number and feature vector acquired from intermediate node n and performs subsequent processing according to the comparison results. That is, the traffic behavior of the vehicle is determined according to the driving information of the correctly tracked vehicle, and if a violation is detected, a penalty is imposed; if the tracking is incorrect, no penalty is imposed.

**In** an example embodiment, it is possible that a small vehicle is blocked by a large vehicle, as large vehicles in tunnels easily block small vehicles, causing the radar to be unable to fully track the trajectory of the small vehicle. When the radar loses track of the target due to obstruction between a large vehicle and a small vehicle, the management platform mines and splices the spatio-temporal trajectories and spatio-temporal intersection points of relevant vehicles, associates and splices the intermittent trajectories, and forms multiple temporary complete trajectories. The correctness of the tracking is achieved by the comparison between the license plate and vehicle feature vector from the earliest segment of the trajectory and the license plate and feature vector from the last segment of the trajectory.

When car-A on lane A tracked by intermediate node 1 is blocked by truck-A at time-A and location local-A, intermediate node 1 associates car-A with truck-A and reports the ID, license plate number, feature vector of car-A, the driving information of car-A before time-A, lane A where car-A is located, time-A at which car-A is lost, location local-A where car-A is lost, and truck-A associated with car-A to the management platform.

Of course, limitation is not limited to intermediate node 1. When any intermediate node from intermediate node 1 to intermediate node n or the exit node detects that a vehicle is blocked, the any intermediate node reports the vehicle's ID, license plate number, feature vector, driving information before being blocked, the lane where the vehicle is, the time and location at which the vehicle is blocked, and the ID of the large vehicle blocking the vehicle to the management platform.

When an intermediate node detects a small vehicle appearing from behind a large vehicle, the intermediate node generates a vehicle ID for the small vehicle (for example, the vehicle ID generated for the small vehicle is new-ID), records the time point time-B and location local-B at which the small vehicle is detected, and tracks the small vehicle. After the small vehicle reaches the identification point corresponding to the intermediate node, the intermediate node sends the new-ID, the lane number of the small vehicle, the time point at which the small vehicle reaches the identification point corresponding to the intermediate node, and other information to the next node. Additionally, the new-ID, the time point time-B and location local-B at which the small vehicle is detected, and the driving information of the small vehicle are reported to the management platform.

Subsequent intermediate nodes inherit the new-ID and track the small vehicle. The new-ID is sequentially passed on to subsequent nodes until the new-ID is passed to the exit node. That is, a subsequent intermediate node determines the small vehicle according to the lane number where the small vehicle is located, the time point at which the small vehicle reaches the identification point corresponding to a previous intermediate node, and the position of the identification point corresponding to the previous intermediate node, inherits the identifier new-ID of the small vehicle, starts tracking the small vehicle from the identification point corresponding to the previous intermediate node, and records the driving information; the subsequent intermediate node reports the driving information and the identifier new-ID of the small vehicle to the management platform. Compared with the vehicle that is tracked from the entrance of the tunnel and is not lost, the reported information of the lost small vehicle does not contain the license plate number and the feature vector of the vehicle.

The radar module of the exit node may acquire the new-ID of the small vehicle, the lane position of the small vehicle at the identification point corresponding to intermediate node n, the time point the small vehicle reaches the identification point corresponding to intermediate node n, and other information according to the information sent by intermediate node n and determine the small vehicle. The radar module of the exit node tracks the small vehicle from the identification point corresponding to intermediate node n, records the driving information of the small vehicle, and reports the driving information of the small vehicle, the new-ID of the small vehicle sent by intermediate node n, and other information to the management platform. The camera module of the exit node may identify the small vehicle when the small vehicle reaches the identification point corresponding to the exit node, acquire the license plate number and feature vector of the small vehicle, and report the license plate number, feature vector, and new-ID to the management platform.

The small vehicle whose identifier is new-ID acquired by the management platform only has the license plate number and feature vector recognized by the exit node, but not the license plate number and feature vector recognized by the entry node, which is different from the vehicle that is tracked throughout the entire process (not lost in the middle). The exit node may append a preset marker to the information of the previously lost vehicle, indicating that the vehicle is previously lost, making it easier for the management platform to differentiate. For example, when the exit node reports the driving information and vehicle ID of the previously lost vehicle, a preset marker may be carried, indicating that the vehicle is previously lost, and the management platform can use this preset marker to determine that the vehicle corresponding to the new-ID is previously lost. In another example embodiment, the management platform may check whether the vehicle corresponding to the vehicle identifier has a license plate number and a vehicle feature vector detected by the entry node and whether the license plate number and the vehicle feature vector detected by the exit node exist. If the license plate number and the vehicle feature vector detected by the entry node do not exist, and the license plate number and the vehicle feature vector detected by the exit node exist, the vehicle is the lost vehicle.

An example is used where the identifier of the lost small vehicle is new-ID. The management platform receives information about the previously lost small vehicle and performs the following processing: Considering that a small vehicle does not disappear or appear without reason, the small vehicle may be blocked by several large vehicles. The management platform finds the corresponding spatio-temporal trajectory for the new-ID before the small vehicle is lost.

The management platform may search for the large vehicle ID in the spatio-temporal trajectory in which the spatio-temporal position, consisting of the time point time-B and the location local-B where the small vehicle is detected, exists. For example, the searched large vehicle ID is truck-B. The management platform continues to search for large vehicles that have a spatio-temporal intersection with truck-B before time-B, such as truck-C (the intersection time point with truck-B is time-truckC) and truck-D (the intersection time point with truck-B is time-truckD). Then the management platform searches for large vehicles (large vehicles other than truck-B) that have a spatio-temporal intersection with truck-C or truck-D before time-B. For example, the result is none. That is, the large vehicles that have a spatio-temporal intersection with the vehicle corresponding to new-ID include truck-B, truck-C, and truck-D. Next, the management platform searches for small vehicles associated with truck-C, truck-D, or truck-B before time-B. For example, only truck-B is previously associated with car-B (the associated time is time-carB, that is, truck-B blocks car-B at time-carB), truck-D has ever been associated with car-D (the associated time is time-carD, that is, truck-D blocks car-D at time-carD), and truck-C has never been associated with any lost small vehicles. That is, the large vehicles that have a spatio-temporal intersection with the small vehicle corresponding to new-ID and have associated small vehicles before time-B include truck-B and truck-D. According to the information found above, the following two temporary complete spatio-temporal trajectories can be formed.

### Temporary spatio-temporal trajectory 1

The spatio-temporal trajectory of car-B before time-carB, the spatio-temporal trajectory of truck-B between time-carB and time-B, and the spatio-temporal trajectory of new-ID after time-B are spliced to obtain temporary spatio-temporal trajectory 1. The new-ID is bond to car-B, and the management platform determines whether the license plate number corresponding to car-B is the same as the license plate number of the vehicle corresponding to new-ID reported by the exit node and whether the feature vector corresponding to car-B is consistent with the feature vector of the vehicle corresponding to new-ID reported by the exit node. If the license plate numbers are the same and the feature vectors are consistent, it indicates that new-ID and car-B correspond to the same vehicle and the vehicle tracking is correct. The management platform may determine the traffic behavior of car-B according to the driving information of car-B before time-carB and the driving information of new-ID after time-B and impose a penalty when a violation is detected. If the license plate numbers are different or the feature vectors are inconsistent, the vehicle tracking is wrong, no penalty is imposed on the violation of car-B or the vehicle corresponding to new-ID, and temporary spatio-temporal trajectory 1 is invalidated. In this embodiment, when a traffic behavior is determined, only the driving information of car-B before time-carB and the driving information of new-ID after time-B are used to determine the traffic behavior of car-B, which is more accurate.

### Temporary spatio-temporal trajectory 2

If time-carD is earlier than time-truckD, then the spatio-temporal trajectory of car-D before time-carD, the spatio-temporal trajectory of truck-D between time-carD and time-truckD, the spatio-temporal trajectory of truck-B between time-truckD and time-B, and the spatio-temporal trajectory of new-ID after time-B are spliced to obtain temporary space-time trajectory 2. If time-carD is later than time-truckD, and in the time period between time-carD and time-B, truck-D and truck-B are in different lanes, respectively and driving side by side, then the spatio-temporal trajectory of car-D before time-carD, the spatio-temporal trajectory of truck-B between time-carD and time-B, and the spatio-temporal trajectory of new-ID after time-B are spliced to obtain temporary spatio-temporal trajectory 2.

The new-ID is bond to car-D, and the management platform determines whether the license plate number corresponding to car-D is the same as the license plate number of the vehicle corresponding to new-ID reported by the exit node and whether the feature vector corresponding to car-D is consistent with the feature vector of the vehicle corresponding to new-ID reported by the exit node. If the license plate numbers are the same and the feature vectors are consistent, it indicates that new-ID and car-D correspond to the same vehicle, and the vehicle tracking is correct. The management platform determines the traffic behavior of car-D according to the driving information of car-D before time-carB and the driving information of new-ID after time-B and imposes a penalty when a violation is detected. if the license plate numbers are different or the feature vectors are inconsistent, the vehicle tracking is wrong, no penalty is imposed on the violation of car-D or the vehicle corresponding to new-ID, and temporary spatio-temporal trajectory 2 is invalidated.

In another example embodiment, if truck-C is associated with car-C before time-B, then similar to the generation method of temporary spatio-temporal trajectory 2, temporary spatio-temporal trajectory 3 is generated, and it is determined whether the license plate number corresponding to car-C is the same as the license plate number of the vehicle corresponding to new-ID reported by the exit node and whether the feature vector corresponding to car-C is consistent with the feature vector of the vehicle corresponding to new-ID reported by the exit node. Subsequent processing is performed based on the determination result. That is, the number of temporary spatio-temporal trajectories is related to the number of large vehicles with spatio-temporal intersections and the number of small vehicles associated with the large vehicles.

In the preceding embodiment, the large vehicles associated with the small vehicle before time-B include large vehicles truck-B and truck-D, and large vehicles truck-B and truck-D each have only one associated small vehicle before time-B. In another example embodiment, if the large vehicle truck-B or truck-D has multiple associated small vehicles before time-B, then, referring to the generation method of a temporary spatio-temporal trajectory, a respective temporary spatio-temporal trajectory is generated according to each associated small vehicle, and it is determined whether the tracking is correct.

In the preceding embodiment, the small vehicle corresponding to new-ID is tracked to the exit node after being discovered. If the small vehicle is lost again before reaching the exit node after being discovered at an intermediate node, in this case, a vehicle with the vehicle identifier new2-ID exists in the reported information received by the management platform, and the vehicle with the vehicle identifier new2-ID lacks a license plate number and a feature vector identified by the entry node and also lacks a license plate number and a feature vector identified by the exit node. For this type of information, the spatio-temporal trajectory is not spliced. The management platform splices the spatio-temporal trajectories for vehicles that do not have license plate numbers and feature vectors recognized by the entry node, but have vehicle identifiers corresponding to license plate numbers and feature vectors recognized by the exit node.

Due to the possibility of errors in radar tracking, in this embodiment, the license plate numbers and vehicle feature vectors at the front and rear ends of the spatio-temporal trajectories are compared, and a penalty is only imposed if the comparison is successful to avoid erroneous penalties.

Considering that a delay exists in the information transfer from the previous device to the next device, the vehicle may miss the identification point, and the tracking may be inaccurate. Therefore, the data can be cached, and accurate tracking can be achieved by searching the cached data. In an example embodiment, the method also includes the following.

Radar tracking data is cached at at least one of the intermediate node or the exit node.

At the intermediate node or the exit node, determining the first vehicle according to the time point at which the first vehicle passes the identification point corresponding to the previous node and the position of the identification point corresponding to the previous node includes the following.

The cached radar tracking data is searched at the intermediate node or the exit node, and the first vehicle is determined from the cached radar tracking data according to the time point at which the first vehicle passes the identification point corresponding to the previous node and the position of the identification point corresponding to the previous node. However, the embodiment of the present disclosure is not limited thereto. When the delay can be ignored, the radar tracking data may not be cached.

In an example embodiment, each device caches its own recorded data, the camera module caches the video information, and the radar module caches the tracking data. For example, the delay acquired through experiments is about 200 ms. When the latter node receives the information sent by the previous node, the latter node may retrieve the record 200 ms ago in its own cached data, track the corresponding target from the record, fast forward and replay until the record is synchronized with the current real scene, thereby achieving accurate target tracking.

It should be understood by those of ordinary skill in the art that function modules/units in all or part of the steps of the method, the system, and the apparatus disclosed above may be implemented as software, firmware, hardware, and appropriate combinations thereof. In the hardware implementation, the division of the functional modules/units mentioned in the above description may not correspond to the division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory or other memory technologies, a compact disc-read only memory (CD-ROM), a digital versatile disc (DVD) or other optical disc storage, a magnetic cassette, a magnetic tape, a magnetic disk storage or other magnetic storage apparatuses, or any other media used for storing desired information and accessed by a computer. In addition, as is known to those skilled in the art, the communication medium generally includes computer-readable instructions, data structures, program modules, or other data in modulated data signals such as carriers or other transmission mechanisms, and may include any information delivery medium. The computer-readable storage medium may be a non-transient computer-readable storage medium.

## Claims

1. A radar-vision collaborative target tracking method, comprising:
acquiring a first image of a first vehicle at an entry node, determining vehicle information of the first vehicle according to the first image, and when the first vehicle reaches an identification point corresponding to the entry node, sending the vehicle information of the first vehicle and a time point at which the first vehicle passes the identification point corresponding to the entry node to an intermediate node adjacent to the entry node;
at an intermediate node, determining the first vehicle according to a time point at which the first vehicle passes an identification point corresponding to a previous node and a position of the identification point corresponding to the previous node, acquiring first radar tracking information obtained by tracking the first vehicle starting from the identification point corresponding to the previous node, and determining driving information of the first vehicle according to the first radar tracking information; and when the first vehicle reaches an identification point corresponding to a current intermediate node, sending a time point at which the first vehicle reaches the identification point corresponding to the current intermediate node and the vehicle information of the first vehicle to a next node; and
at an exit node, determining the first vehicle according to a time point at which the first vehicle passes an identification point corresponding to a previous node and a position of the identification point corresponding to the previous node, acquiring second radar tracking information obtained by tracking the first vehicle from the identification point corresponding to the previous node,
determining driving information of the first vehicle according to the second radar tracking information, acquiring a second image of the first vehicle, determining vehicle information according to the second image, and when the vehicle information determined according to the second image matches the vehicle information of the first vehicle received from the previous node,
determining that tracking of the first vehicle is correct, wherein at least one intermediate node is comprised between the entry node and the exit node.

2. The method of claim 1, further comprising:
sending lane information of the first vehicle to a next node when the first vehicle reaches an identification point corresponding to a current node,
wherein at the intermediate node, determining the first vehicle according to the time point at which the first vehicle passes the identification point corresponding to the previous node and the position of the identification point corresponding to the previous node comprises:
at the intermediate node, determining the first vehicle according to the time point at which the first vehicle passes the identification point corresponding to the previous node, the lane information of the first vehicle, and the position of the identification point corresponding to the previous node.

3. The method of claim 1, further comprising:
caching radar tracking data at at least one of the intermediate node or the exit node,
wherein at the intermediate node, determining the first vehicle according to the time point at which the first vehicle passes the identification point corresponding to the previous node and the position of the identification point corresponding to the previous node comprises:
searching cached radar tracking data at the intermediate node, and determining the first vehicle from the cached radar tracking data according to the time point at which the first vehicle passes the identification point corresponding to the previous node and the position of the identification point corresponding to the previous node; and
wherein at the exit node, determining the first vehicle according to the time point at which the first vehicle passes the identification point corresponding to the previous node and the position of the identification point corresponding to the previous node comprises:
searching the cached radar tracking data at the exit node, and determining the first vehicle from the cached radar tracking data according to the time point at which the first vehicle passes the identification point corresponding to the previous node and the position of the identification point corresponding to the previous node.

4. The method of claim 1, further comprising:
at the intermediate node, reporting the vehicle information and the driving information of the first vehicle to a management platform;
at the exit node, reporting the vehicle information and the driving information of the first vehicle to the management platform, and when the tracking of the first vehicle is determined to be correct,
reporting correct tracking information of the first vehicle to the management platform; and
determining, by the management platform, a traffic behavior of a correctly tracked first vehicle according to the driving information of the correctly tracked first vehicle.

5. The method of claim 4, further comprising:
assigning a vehicle identifier to the first vehicle at the entry node, and when the vehicle information of the first vehicle and the time point at which the first vehicle passes the identification point corresponding to the entry node are sent to the intermediate node adjacent to the entry node, carrying the vehicle identifier assigned to the first vehicle; and
when the first vehicle is determined at the intermediate node or the exit node according to the time point at which the first vehicle passes the identification point corresponding to the previous node and the position of the identification point corresponding to the previous node, inheriting the vehicle identifier of the first vehicle, and reporting the vehicle identifier of the first vehicle to the management platform.

6. The method of claim 5, further comprising:
at the intermediate node, in response to detecting that a second vehicle is blocked by a preset vehicle at a first time point and a first location, associating the second vehicle with the preset vehicle, and reporting vehicle information of the second vehicle, the first time point, the first location, and an identifier of the preset vehicle to the management platform; in response to detecting that a third vehicle appears after the preset vehicle, assigning a vehicle identifier to the third vehicle, recording a second time point and a second location when the third vehicle is discovered, and reporting the second time point and the second location to the management platform; and tracking the third vehicle, recording tracked driving information of the third vehicle, and when the third vehicle reaches the identification point corresponding to the current intermediate node, sending a time point at which the third vehicle reaches the identification point corresponding to the current intermediate node, vehicle information of the third vehicle, and the vehicle identifier of the third vehicle to the next node; wherein the preset vehicle is a vehicle that meets a preset size requirement;
receiving, by the management platform, the driving information and the vehicle information of the third vehicle reported by the exit node, wherein the driving information of the third vehicle comprises a spatio-temporal trajectory; in response to determining that the third vehicle is a previously lost vehicle, acquiring the second time point and the second location of the third vehicle, searching a target preset vehicle whose spatio-temporal position matches the second time point and second location in the spatio-temporal trajectory, determining a first associated vehicle that is blocked by the target preset vehicle before the second time point, and acquiring an associated time point at which the target preset vehicle blocks the first associated vehicle; and
splicing, by the management platform, a spatio-temporal trajectory of the first associated vehicle before the associated time point, a spatio-temporal trajectory of the target preset vehicle from the associated time point to the second time point, and a spatio-temporal trajectory of the third vehicle after the second time point to obtain a target temporary trajectory, determining whether the target temporary trajectory is correct according to whether vehicle information of the first associated vehicle and the vehicle information of the third vehicle are the same, and when the target temporary trajectory is correct, using the target temporary trajectory as a spatio-temporal trajectory of the third vehicle.

7. The method of claim 6, further comprising: determining a preset vehicle, other than the target preset vehicle, that has a spatio-temporal intersection with the target preset vehicle before the second time point and has an associated vehicle, wherein a spatio-temporal intersection time point of an i-th preset vehicle and the target preset vehicle is an i-th intersection time point, an associated vehicle of the i-th preset vehicle is vehicle i, and a time point at which the i-th preset vehicle blocks the vehicle i is an i-th associated time point, wherein i is an integer from 1 to m, and m is greater than or equal to 1;
generating an i-th temporary trajectory for the i-th preset vehicle,
wherein in response to determining that the i-th associated time point is earlier than the i-th intersection time point, the i-th temporary trajectory is a spatio-temporal trajectory obtained by splicing a spatio-temporal trajectory of the vehicle i before the i-th associated time point, a spatio-temporal trajectory of the i-th preset vehicle from the i-th associated time point to the i-th intersection time point, a spatio-temporal trajectory of the target preset vehicle from the i-th intersection time point to the second time point, and a spatio-temporal trajectory of the third vehicle after the second time point;
in response to determining that the i-th associated time point is later than the i-th intersection time point, the i-th temporary trajectory is a spatio-temporal trajectory obtained by splicing the spatio-temporal trajectory of the vehicle i before the i-th associated time point, the spatio-temporal trajectory of the target preset vehicle from the i-th associated time point to the second time point, and the spatio-temporal trajectory of the third vehicle after the second time point; and
determining whether the i-th temporary trajectory is correct according to whether vehicle information of vehicle i and the vehicle information of the third vehicle are the same, and when the i-th temporary trajectory is correct, using the i-th temporary trajectory as the spatio-temporal trajectory of the third vehicle.

8. The method of any one of claims 1 to 7, wherein the vehicle information comprises at least one of the following: a license plate number or a vehicle feature vector; and the driving information comprises at least one of the following: a trajectory, a speed, or a traffic violation.

9. A radar-vision collaborative target tracking system, comprising an entry node, an exit node, and at least one intermediate node located between the entry node and the exit node, wherein the entry node located at an entrance of a tunnel comprises a camera module, the at least one intermediate node located in the tunnel comprises a radar module, the exit node located at an exit of the tunnel comprises the radar module and the camera module, and each node corresponds to an identification point, wherein
the entry node is configured to acquire a first image of a first vehicle, determine vehicle information of the first vehicle according to the first image, and when the first vehicle reaches an identification point corresponding to the entry node, send the vehicle information of the first vehicle and a time point at which the first vehicle passes the identification point corresponding to the entry node to an intermediate node adjacent to the entry node;
the intermediate node is configured to determine the first vehicle according to a time point at which the first vehicle passes an identification point corresponding to a previous node and a position of the identification point corresponding to the previous node, acquire first radar tracking information obtained by tracking the first vehicle starting from the identification point corresponding to the previous node, and determine driving information of the first vehicle according to the first radar tracking information; and when the first vehicle reaches an identification point corresponding to a current intermediate node, send a time point at which the first vehicle reaches the identification point corresponding to the current intermediate node and the vehicle information of the first vehicle to a next node; and
the exit node is configured to determine the first vehicle according to a time point at which the first vehicle passes an identification point corresponding to a previous node and a position of the identification point corresponding to the previous node, acquire second radar tracking information obtained by tracking the first vehicle from the identification point corresponding to the previous node, determine driving information of the first vehicle according to the second radar tracking information, acquire a second image of the first vehicle, determine vehicle information according to the second image, and when the vehicle information determined according to the second image matches the vehicle information of the first vehicle received from the previous node, determine that tracking of the first vehicle is correct.

10. The target tracking system of claim 9, further comprising: a management platform, wherein the intermediate node is further configured to report the vehicle information and the driving information of the first vehicle to the management platform; in response to detecting that a second vehicle is blocked by a preset vehicle at a first time point and a first location, associate the second vehicle with the preset vehicle, and report vehicle information of the second vehicle, the first time point, the first location, and an identifier of the preset vehicle to the management platform; in response to detecting that a third vehicle appears after the preset vehicle, assign a vehicle identifier to the third vehicle, record a second time point and a second location when the third vehicle is discovered, and report the second time point and the second location to the management platform; and track the third vehicle, record tracked driving information of the third vehicle, and when the third vehicle reaches the identification point corresponding to the current intermediate node, send a time point at which the third vehicle reaches the identification point corresponding to the current intermediate node, vehicle information of the third vehicle, and the vehicle identifier of the third vehicle to the next node; wherein the preset vehicle is a vehicle that meets a preset size requirement;
the exit node is further configured to, in response to determining that the tracking of the first vehicle is correct, report correct tracking information of the first vehicle to the management platform and report the vehicle information and the driving information of the first vehicle to the management platform; and
the management platform is configured to determine a traffic behavior of a correctly tracked first vehicle according to the driving information of the correctly tracked first vehicle; receive the driving information and the vehicle information of the third vehicle reported by the exit node, wherein the driving information comprises a spatio-temporal trajectory; in response to determining that the third vehicle is a previously lost vehicle, acquire the second time point and the second location of the third vehicle, search a target preset vehicle whose spatio-temporal position matches the second time point and second location in the spatio-temporal trajectory, determine a first associated vehicle that is blocked by the target preset vehicle before the second time point, and acquire a time point, also referred to as an associated time point, at which the target preset vehicle blocks the first associated vehicle; obtain a target temporary trajectory by splicing a spatio-temporal trajectory of the first associated vehicle before the associated time point, a spatio-temporal trajectory of the target preset vehicle from the associated time point to the second time point, and a spatio-temporal trajectory of the third vehicle after the second time point, determine whether the target temporary trajectory is correct according to whether vehicle information of the first associated vehicle and the vehicle information of the third vehicle are the same, and when the target temporary trajectory is correct, use the target temporary trajectory as a spatio-temporal trajectory of the third vehicle.
